Europäisches Patentamt

(19) European Patent Office

Office européen des brevets

(11) Publication number: **0 248 658**
A2

(12) **EUROPEAN PATENT APPLICATION**

(21) Application number: **87304923.3**

(22) Date of filing: **03.06.87**

(51) Int. Cl.³: **C 08 G 18/42**
**C 09 J 5/06**

(30) Priority: **04.06.86 GB 8613573**

(43) Date of publication of application:
**09.12.87 Bulletin 87/50**

(84) Designated Contracting States:
**DE ES FR GB IT NL SE**

(71) Applicant: **SCOTT BADER COMPANY LIMITED**
**Wollaston**
**Wellingborough, Northamptonshire NN9 7RL(GB)**

(72) Inventor: **Reeves, Julie**
**101 High Street**
**Irchester Northants(GB)**

(74) Representative: **Coleiro, Raymond et al,**
**MEWBURN ELLIS & CO. 2/3 Cursitor Street**
**London EC4A 1BQ(GB)**

(54) **Urethane based hot melt adhesives.**

㋝ A polyurethane hot melt adhesive comprises an admixture, or reaction product, of a crystalline polyester diol and a di-isocyanate in which the polyester diol has an acid residue at least 50 molar % of which is derived from a symmetrical aromatic dicarboxylic acid.

The adhesive may comprise a reaction product of the crystalline polyester diol, the di-isocyanate and an isocyanate blocking agent, preferably in an amount sufficient to block all of the isocyanate groups.

Alternatively the adhesive may be a reaction mixture of the crystalline polyester diol and a di-isocyanate terminated dicarbamate ester.

EP 0 248 658 A2

# URETHANE BASED HOT MELT ADHESIVES

This invention relates to urethane based hot melt adhesives which are the reaction products of polyester diols and di-isocyanates.

Adhesives of many types are available ranging from water soluble gums, through solvent soluble polymers to cross linkable polymer systems. All find specific uses despite many drawbacks; e.g. water soluble polymers yield bonds which are sensitive to moisture while solvent soluble systems often employ solvents which are flammable and/or toxic.

To overcome some of these objections more attention has been paid to hot melt adhesives. However such adhesives often have high melting points (i.e. high application and cure temperatures) and do not wet some substrates very easily. A description of some hot melt adhesives based on polyurethanes is given by H. von Voithenberg, European Adhesives and Sealants, September 1984, pages 28-32.

There are several different types of hot melt adhesive based on polyurethanes.

Thus GB-A-1554102 describes an adhesive comprising a polyurethane having an isocyanate component derived from a dicyclohexyl, or hydrogenated xylylene di-isocyanate and a glycol component derived from a mixture of a polyester diol and, as chain extender 1,4-butanediol. The ratio of isocyanate : isocyanate-reaction group is from 0.95:1 to 1.10:1. On hot melt application, curing presumably takes place by reaction of the free isocyanate and hydroxyl groups.

GB-B-2107335 describes a polyurethane adhesive composition comprising an isocyante-terminated polyurethane prepolymer, derived, for example, from a polyester diol and a di-isocyanate, and a dicarbamate ester, which is the reaction product of two moles of a di-isocyanate with one mole of a diol. After hot melt application, the adhesive is moisture cured, presumably by the mechanism involving the isocyanate group described in the article by von Voithenberg (supra), both the polyurethane prepolymer and the dicarbamate ester taking part in the curing reaction.

GB-A-2137638 describes a moisture curable adhesive composition comprising an isocyanate-containing polyurethane prepolymer derived from a linear hydroxy polyester and a di-isocyanate, up to 40 mole % of the di-isocyanate groups having been reacted with a blocking agent. Again, presumably moisture curing takes place by the mechanism suggested by von Voithenberg (supra).

The acid components of the polyester diols disclosed in GB-A-1554102, GB-B-2107335 and GB-A-2137638 are all aliphatic, but GB-A-2137638 contains a disclosure that the acid component of the polyester polyol may include up to 25% on a molar basis of other acids or their ester forming derivatives, for example, cyclohexane dicarboxylic acids, terephthalic acid or isophthalic acid.

We have now discovered that at least 50 molar %, say 70 molar %, or even all of the aliphatic dicarboxylic acid component of the polyester diol used to prepare a polyurethane can be replaced by a symmetrical aromatic dicarboxylic acid to yield crystalline polyester diols whose melt viscosities at temperatures of 20-25°C above their melting points are much lower than those previously described, and which after reaction with di-isocyanate yield crystalline polyurethanes whose melt viscosities at temperatures of 20-25°C above their melt points are also much lower than those previously described. This renders the polyurethanes more fluid on hot melt application, leading to improved adhesion and ease of application.

These mixed aromatic/aliphatic polyester diols may be prepared by reacting an acid component at least 50% of which is at least one symmetrical aromatic dicarboxylic acid, for example, terephthalic acid and, optionally additionally at least one symmetrical aliphatic dicarboxylic acid, e.g. adipic, glutaric, succinic, malonic, pimelic, azelaic, sebacic or similar acid with a glycol component comprising at least one, and possibly two or more symmetrical aliphatic glycol(s), e.g. ethylene glycol, diethylene glycol, neopentyl glycol, 1,3-propanediol, 1,4-butanediol or 1,6-hexanediol. The acids and glycols, or respective ester forming derivatives thereof, are reacted together with the glycol in slight excess, say to an acid value below 5 mg KOH/g. Melting points are from 100 up to 125°C and the viscosities of these polyester diols are around 30 poise (3 Pa.s) at 25°C above their melting points.

Such a polyester diol can then be reacted with at least one di-isocyante to yield the polyurethane. Preferably a blocking agent is included within the reaction mixture at some stage of the reaction, or the resultant polyurethane is reacted with a blocking agent, to yield a blocked adhesive used as a one pot system. Suitable blocking agents are acetyl acetone and $\varepsilon$-caprolactone. It is preferred that sufficient blocking agent is present to remove all free isocyanate groups. The polyurethane adhesive may be applied by heating to a temperature sufficient to melt it and thereafter to a higher temperature sufficient to split off the blocking agent and so allow curing to take place.

A typical di-isocyanate is 4,4'-diphenylmethane di-isocyanate, but linear di-isocyanate-terminated carbamates or polyurethanes may alternatively be employed as the di-isocyanate.

Alternatively, the polyester diol can be mixed with a di-isocyanate terminated dimer or polymer such as a dicarbamate ester di-isocyanate formed by the reaction of a glycol (1 mole), e.g. 1,3-butylene glycol or 1,2-propylene glycol with a di-isocyanate (2 mole), e.g. a diphenylmethane di-isocyanate, and used as a one or two pot adhesive. On hot melt application, the polyester diol and dicarbamate ester isocyanate react to form the polyurethane. It is preferred that sufficient polyester diol is present in the mixture so that on reaction to form the polyurethane all free isocyanate groups are removed.

The polyurethane may additionally contain residues derived from other substances such as the above-mentioned blocking agents or, for example, monoisocyantes which yield allophanate or biuret structures as described by von Voithenberg (supra).

Preferred embodiments of the invention will now be described with reference to the following Examples.

Example 1

A saturated crystalline polyester diol was made by the reaction of terephthalic acid (0.7 mole), adipic acid (0.3 mole) and 1,6-hexanediol (1.1 moles). They were reacted under typical esterification conditions at 240°C with removal of water. Crystalline polyester was obtained with an acid value of < 5 mg KOH/g, a hydroxyl value of 47 mg KOH/g, a melting point of 110-115°C and a viscosity of 30 poise (3 Pa.s) at 125°C.

Example 2

A second crystalline polyester diol was manufactured as in Example 1 using terephthalic acid (1 mole), 1,6-hexanediol (0.8 mole) and diethylene glycol (0.2 mole). Again the acid value was below 5 mg KOH/g and the hydroxyl value 47 mg KOH/g with a melting point of 120-125°C and a viscosity of 32p (3.2 Pa.s) at 150°C.

Example 3

The polyester diol of Example 1 (1 mole) was reacted with 2 moles of pure 4,4'-diphenylmethane di-isocyanate at 110-120°C until the NCO content had reduced to theoretical (i.e. had halved), when 2.2 moles of a blocking agent were added and reacted at 110-130°C until no free NCO could be detected. The blocking agent used was acetylacetone.

Example 4

The same procedure as that described in Example 3 was followed except that $\varepsilon$-caprolactone was used as the blocking agent and the polyester was that described in Example 2.

Example 5

A dicarbamate ester was formed by reacting 1 mole 1,3-butanediol with 2 moles of pure diphenylmethane di-isocyanate (mixed isomers sold under the designation OPA 225 by Upjohn). The dried glycol was drip fed into the di-isocyanate at 80° - 100°C and the temperature held for about one hour until the theoretical isocyanate content was obtained.

Example 6

A second dicarbamate ester was formed using the procedure of Example 5 but replacing 1,3-butylene glycol by 1,2-propylene glycol.

Example 7

To simulate hot melt application ground blocked -isocyanate resin from Example 3 was sprinkled onto hot aluminium surfaces which were then clamped together for 5 minutes at 180°C. A lap shear strength (12.5 x 25 mm overlap) of 9 MPa was achieved.

Example 8

The procedure of Example 7 was followed except that the resin used was that of Example 4.  Similar strength figures were obtained.

Example 9

A mixture of the powdered resin of Example 1 and half the molar amount of dicarbamate ester of Example 5 were sprinkled on to hot aluminium surfaces which were then clamped together for five minutes at 180°C. A lap shear strength of 8 MPa was achieved.

CLAIMS:

1. A polyurethane hot melt adhesive comprising an admixture, or reaction product, of a crystalline polyester diol and a di-isocyanate, characterized in that the polyester diol has an acid residue at least 50 molar % of which is derived from a symmetrical aromatic dicarboxylic acid.

2. A polyurethane hot melt adhesive according to Claim 1, wherein the acid residue of the polyester diol is derived additionally from a linear aliphatic dicarboxylic acid.

3. A polyurethane hot melt adhesive according to Claim 2, wherein the linear aliphatic dicarboxylic acid is adipic, glutaric, succinic, malonic, pimelic, azelaic or sebacic acid.

4. A polyurethane hot melt adhesive according to any preceding claim, wherein the symmetical aromatic dicarboxylic acid is terephthalic acid.

5. A polyurethane hot melt adhesive according to any preceding claim, wherein at least 70 molar % of the acid residue of the polyester diol is derived from the symmetrical aromatic dicarboxylic acid.

6. A polyurethane hot melt adhesive according to Claim 5, wherein all of the acid residue of the polyester diol is derived from the aromatic dicarboxylic acid.

7. A polyurethane hot melt adhesive according to any preceding claim, wherein the polyester diol has a glycol residue derived from at least two glycols.

8.    A polyurethane hot melt adhesive according to any preceding claim, wherein the polyester diol has a glycol residue derived from at least one glycol, the or each glycol being selected from ethylene glycol, diethylene glycol, neopentyl glycol, 1,3-propanediol, 1,4-butanediol and 1,6-hexanediol.

9.    A polyurethane hot melt adhesive according to any preceding claim,  wherein the polyester diol has an acid value below 5 mg KOH/g.

10.    A polyurethane hot melt adhesive according to any preceding claim, which is a said reaction product having substantially no free isocyanate groups, or a reaction mixture capable of reaction to form a polyurethane having substantially no free isocyanate groups.

11.    A polyurethane hot melt adhesive according to any preceding claim, which is the reaction product of the said crystalline polyester diol, the said di-isocyanate and an isocyanate blocking agent.

12.    A polyurethane hot melt adhesive according to Claim 11, having substantially no free isocyanate groups.

13.    A polyurethane hot melt adhesive according to Claim 11 or  Claim 12, wherein the di-isocyanate is 4,4'-diphenylmethane di-isocyanate.

- 10 -

14. A polyurethane hot melt adhesive according to Claim 11, Claim 12 or Claim 13, wherein the isocyanate blocking agent is acetyl acetone or ε-caprolactone.

15. A polyurethane hot melt adhesive according to any one of claims 1 to 10, which is an admixture of the said crystalline polyester diol and a di-isocyanate terminated dicarbamate ester.

16. A polyurethane hot melt adhesive according to Claim 15, wherein the respective amounts of the said polyester diol and the said dicarbamate ester are such as to provide a polyurethane containing essentially no free isocyanate groups on reaction thereof.

17. A polyurethane hot melt adhesive according to Claim 15 or Claim 16, wherein the said dicarbamate ester has a glycol residue derived from 1,3-butylene glycol or 1,2-propylene glycol.

18. A polyurethane hot melt adhesive according to Claim 15, Claim 16 or Claim 17, wherein the said dicarbamate ester has an isocyanate residue derived from a diphenylmethane di-isocyanate.